(19) Europäisches Patentamt
European Patent Office
Office européen des brevets

(11) EP 2 127 523 B1

(12) EUROPÄISCHE PATENTSCHRIFT

(45) Veröffentlichungstag und Bekanntmachung des Hinweises auf die Patenterteilung:
**22.05.2013 Patentblatt 2013/21**

(21) Anmeldenummer: **09170055.9**

(22) Anmeldetag: **17.12.2005**

(51) Int Cl.:
***A01N 51/00*** *(2006.01)*
***A01N 43/40*** *(2006.01)*
***A01P 7/04*** *(2006.01)*
*A01N 37/50 (2006.01)*
***A01N 47/40*** *(2006.01)*
***A01P 3/00*** *(2006.01)*
*A01N 47/24 (2006.01)*

(54) **Insektizide auf Basis von Neonicotinoiden und ausgewählten Strobilurinen**

Insecticide on the basis of neonicotinoids and selected strobilurins

Insecticide à base de néonicotinoïdes et strobilurines sélectionnés

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.12.2004 DE 102004062513**

(43) Veröffentlichungstag der Anmeldung:
**02.12.2009 Patentblatt 2009/49**

(62) Dokumentnummer(n) der früheren Anmeldung(en) nach Art. 76 EPÜ:
**05850298.0 / 1 830 651**

(73) Patentinhaber: **Bayer CropScience AG**
**40789 Monheim (DE)**

(72) Erfinder:
- **Krohn, Peter-Wilhelm, Dr.**
**51373 Leverkusen (DE)**
- **Becker, Rolf, Christian, Dr.**
**51399 Burscheid (DE)**
- **Hungenberg, Heike**
**40764 Langenfeld (DE)**

(56) Entgegenhaltungen:
**WO-A-03/015515**
**WO-A1-2006/023899**
**US-A1- 2004 186 149**

- **JAYASENA K W ET AL: "Evaluation of fungicides in control of spot-type net blotch on barley" CROP PROTECTION, ELSEVIER SCIENCE, GB, Bd. 21, Nr. 1, 1. Februar 2002 (2002-02-01), Seiten 63-69, XP002347515 ISSN: 0261-2194**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 127 523 B1

**Beschreibung**

Die vorliegende Erfindung betrifft neue Wirkstoffkombinationen, die als Wirkstoffe einen Wirkstoff aus der Reihe der Neonicolinoide einerseits und zumindest einen Wirkstoff ausgewählt aus der Gruppe der Strobilurin Fungizide andererseits enthalten und überraschend gute insektizide Eigenschaften besitzen.

Es ist bereits bekannt, dass das Strobilurin Fungizid Picoxystrobin der Formel

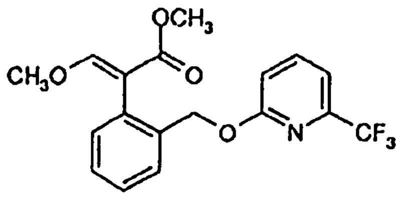

als Fungizid zur Bekämpfung von Pilzkrankheiten der Pflanze eingesetzt werden kann. Picoxystrobin wird zum Beispiel beschrieben in EP 0 278 595 A2 oder in "The Pesticide Manual", 13. Auflage (2003), veröffentlicht vom British Crop Protection Council.

Es ist ebenfalls bekannt, dass das Strobilurin Fungizid Pyraclostrobin der Formel

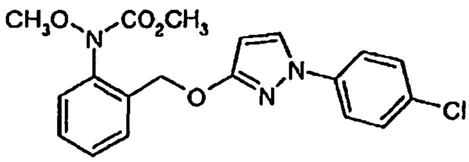

als Fungizid zur Bekämpfung von Pilzkrankheiten der Pflanze eingesetzt werden kann. Pyraclostrobin wird zum Beispiel beschrieben in "The Pesticide Manual", 13, Auflage (2003), veröffentlicht vom British Crop Protection Council oder auch in WO 96/01256 A1.

Es ist ebenfalls bereits bekannt, das das Strobilurin Fungizid Dimoxystrobin der Formel

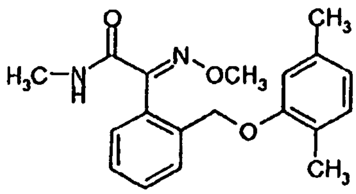

als Fungizid zur Beklimpfung von Pilzkrankheiten der Pflanze eingesetzt werden kann. Dimoxystrobin wird zum Beispiel beschrieben in EP 0 398 692 A2 oder in "The Pesticide Manual", 13. Auflage (2003), veröffentlicht vom British Crop Protection Council.

Es ist ebenfalls bereits bekannt, dass das Strobilurin Fungizid Metominustrobin der Formel

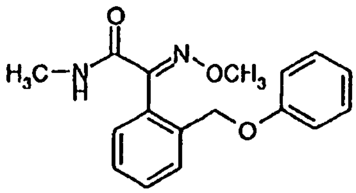

als Fungizid zur Bekämpfung von Pilzkrankheiten der Pflanze eingesetzt werden kann. Metaminostrobin wird zum Beispiel beschrieben in EP 0 398 692 A2 oder in "The Pesticide Manual", 13. Auflage (2003), veröffentlicht vom British Crop Protection Council.

Es ist ebenfalls bereits bekannt, dass das Strobilurin Fungizid Orysastrobin der Formel

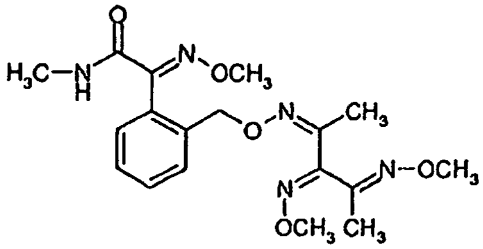

als Fungizid zur Bekämpfung von Pilzkrankheiten der Pflanze eingesetzt werden kann. Metaminostrobin wird zum Beispiel beschrieben in EP 0 876 332 A1.

Ferner ist bereits bekannt, dass das Fungizid Trifloxystrobin mit Chlormikotinglinsektiziden synergistrische Maschungen bildet (WO 03/015515).

Die genannten Strobilurine blockieren in den Pilzzellen den Eletronentransport in der Atmungskette und verhindern damit die Produktion von ATP.

Weiterhin ist bekannt, dass sich Neonicotinoide wie z.B. Imidacloprid, Thiacloprid, Clothianidin, Thiamethoxan, Acelamiprid, Nitenpyran und Dinolefuran zur Beckämpfung von tierischen Schädlingen, insbesondere Insekten eignen.

Die Wirksamkeit dieser Verbindungen ist gut, entspricht aber bei niedrigen Aufwandmengen oder gegen einzelne Schädlinge in manchen Fällen nicht den hohen Anforderungen, die an Insektizide gestellt werden.

Es würde nun gefunden, dass Mischungen umfassend zumindest eine Verbindung nus der Reihe der nachfolgend genannten Neonicotinoide und zumindest einem der vorstehend genannten Strobilurine aus der Reihe Picoxystrobin, Pyroclostrobin Dimoxystrobin und Orysastrobin synergistisch wirksam sind und sich zur Bekämpfung von Insekten in besonderer Weise eignen, wobei die jeweilige Wirkung dieser Kombinationen stärker ist als die Wirkung der einzelnen Wirkstoffe. Durch die Anwendung dieser erfindungsgemäßen Mischungen können deutlich geringere Wirkstoffinengen verwendet werden, d.h. die Wirkung der Mischung ist größer als die Wirkung der Einzelkomponenten,

Es zeigte sich überraschenderweise auch, dass die erfindungsgemäßen Kombinationen sich insbesondere gut zur Behandlung von Saatgut und den daraus hervorgehenden Pflanzen zum Schutz vor Insekten eignen. Besonders bevorzugt sind dabei Mischungen zu nennen, die zumindest ein Neonicotinoid aus der Reihe Clothianidin und Imidacloprid enthalten, wobei Clothiandin insbesondere bevorzugt zu nennen ist. Ebenfalls bevorzugt sind solche Mischungen zu nennen, die Pyraclostrobin umfassen.

Die vorstehend genannten Neonicotinoide sind bekannt, beispielsweise aus "The Pesticide Manual", 13. Auflage (2003), veröffentlicht vom British Crop Protection Council.

Clothianidin besitzt die Formel

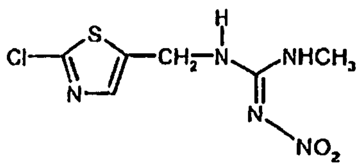

und ist bekannt aus EP A2 0 376 279.

Thiacloprid besitzt die Formel

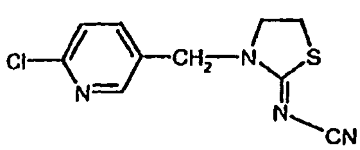

und ist bekannt aus der EP A2 0 235 725.

Acetamiprid besitzt die Formel

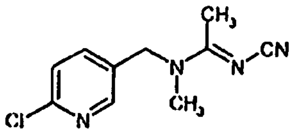

und ist bekannt aus WO A1 91/04965.

Imidacloprid besitzt die Formel

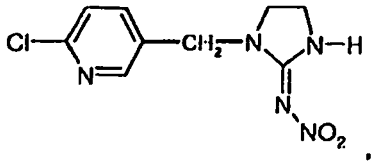

und ist bekannt aus EP A1 0 192 060.

Das Verhältnis der eingesetzten Wirkstoffe zueinander, sowie die anzuwendende Gesamtmenge der Mischung ist von der Art und dem Vorkommen der Insekten abhängig. Die optimalen Verhältnisse und Gesamteinsatzmengen können bei jeder Anwendung jeweils durch Testreihen ermittelt werden. Im Allgemeinen liegt das Gewichtsverhältnis eines Wirkstoffes ausgewählt nus den vorstehend genannten Strobilurinen und eines Wirkstoffes ausgewählt aus einem der vorstehend genannten Neonicotinoide zwischen 1000 zu 1 und 1 zu 100, bevorzugt zwischen 625 zu 1 und 1 zu 100, besonders bevorzugt zwischen 125 zu 1 und 1 zu 50 und ganz besonders bevorzugt zwischen 25 zu 1 und 1 zu 5, wobei hier das Fungizid in den Verhältnissen zuerst genannt ist.

Eine weitere besonders bevorzugte erfindungsgmäße Mischung umfasst den Wirkstoff Pyraclostrobin und Clothianidin. In der Mischung liegt das Gewichtsverhältnis beider Wirkstoffe zueinander zwischen 1000 zu 1 und 1 zu 100, bevorzugt zwischen 623 zu 1 und 1 zu 100, besonders bevorzugt zwischen 125 zu 1 und 1 zu 50 und ganz besonders bevorzugt zwischen 25 zu 1 und 1 zu 5, wobei hier wie im Folgenden Pyraclostrobin in den Verhältnissen jeweils zuerst genannt ist.

Eine weitere besonders bevorzugte erfindungsgemäße Mischung umfasst den Wirkstoff Pyraclostrobin und Imidacloprid. In der Mischung liegt das Gewichtsverhältnis beider Wirkstoffe zueinander zwischen 1000 zu 1 und 1 zu 100, bevorzugt zwischen 625 zu 1 und 1 zu 100, besonders bevorzugt zwischen 125 zu 1 und 1 zu 50 und ganz besonders bevorzugt zwischen 25 zu 1 und 1 zu 5, wobei hier wie im Folgenden Pyraclostrobin in den Verhälnissen jeweils zuerst genannt ist.

Bevorzugte Mischungen im Sinne der vorliegenden Erfindung umfassen auch Kombinationen aus Thiacloprid und Pyraclostrobin,

Bevorzugte Mischungen im Sinne der vorliegenden Erfindung umfassen auch Kombinationen aus Acetamiprid und Pyraclostrobin.

Bevorzugte Mischungen im Sinne der vorliegenden Erfindung umfassen auch Kombinationen aus zwei der vorstehend genannten Neonicotinoide und Pyraclostrobin, Bevorzugt zu nennen sind dabei Mischungen umfassend Clothianidin und Imidacloprid sowie Pyraclostrobin. Bevorzugt zu nennen wären ebenfalls die Kombinationen aus Clothianidin und Thiacloprid oder Imidacloprid und Thiacloprid einerseits und Pyraclostrobin, andererseits.

Die bevorzugten erfindungsgemäßen Wirkstoffkombinationen sind in der folgenden Tabelle noch einmal zusammengefasst:

| Wirkstoff der Gruppe (a) -Neonicotinyle- | Wirkstoff der Gruppe (b) -Strobiturline- | Gewichsverhältnis des Wirkstoffs der Gruppe (a) zum Wirkstoff der Gruppe (b) |
|---|---|---|
| | | |
| Clothianidin | Pyraclostrobin | 1000 : 1 bis 1 : 100 |

(fortgesetzt)

| Wirkstoff der Gruppe (a) -Neonicotinyle- | Wirkstoff der Gruppe (b) -Strobllturline- | Gewichsverhältnis des Wirkstoffs der Gruppe (a) zum Wirkstoff der Gruppe (b) |
|---|---|---|
| Imidacloprid | Pyraclostrobin | 1000 : 1 bis 1 : 100 |
| Thiacloprid | Pyraclostrobin | 1000 : 1 bis 1 : 100 |
| Acetamiprid | Pyraclostrobin | 1000 : 1 bis 1 : 100 |

Die Wirkstoffkombinationen eignen sich bei guter Pflanzenverträglichkeit und günstiger Warmblätertoxizität zur Bekämpfung von Insekten, die in der Landwirtschaft, in Forsten, im Vorrats- und Materialschutz sowie auf dem Hygienesektor vorkommen. Sie können vorzugsweise als Pflanzenschulzmittel bei der Blatt- und Bodenbehandlung eingesetzt werden.

Dic erfindungsgemäßen Wirkstoftkombinationen sind wie oben bereits erwähnt, gegen normal sensible und resistente Arten sowie gegen alle oder einzeine Entwieklungsstadien von Insekten wirksam. Zu den oben erwähnten Insekten gehören:

. Aus der Ordnung der Thysanura z.B. Lepisma saccharina. Aus der Ordnung der Orthoptera z.B. Achela domesticus, Gryllotalpa spp., Locusta migratoria migratorioides, Melanoplus spp., Schistocerca gregaria. Aus der Ordnung der Biallaria z.B. Blatta orientalis, Periplaneta americana, Leucophaca maderae, Blattella germanica. Aus der Ordnung der Dermaptera z.B. Forficula auricularia. Aus der Ordnung der isoptera z.B. Reticulitermes spp. Aus der Ordnung der Phthiraptera z.B. Pediculus humanus corporis, Haematopinus spp., Linognathus spp., Trichodectes spp., Damalinia spp. Aus der Ordnung der Thysanoptera z.B. Hereinothrips femoralis, Thrips tabaci, Thrips palmi, Frankliniella occidentalis. Aus der Ordnung der Heteroptera z.B. Eurygaster spp., Dysdercus intermedius, Piesina quadrata, Cimex lectularius, Rhodnius prolixus, Triatoma spp. Aus der Ordnung der Homoptera z.B. Alcarodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobalus, Nephotettix cineticeps, Lecanium corni, Saisselin oleac, Laodelphax striatellus, Nilaparvata lugens, Aonidiella aurantii, Aspidiotus hederae, Pseudococcus spp., Psylla spp. Aus der Ordnung der Lepidoptera z.H. Pectinophora gossypiella, Bupalus piniarius, Cheimatobia brunata, Lithocolletis blancardella, Hyponomeuta padella, Plutella xylostolla, Malacosoma neustria, Euproctis chrysorrhoca, Lymantria spp., Bucculatrix thurberiella, Phyllocnistis citrella, Agrotis spp., Euxon spp., Feltia spp., Earias insulana, Heliolltis spp., Mamestra brassicae, Panolis flammea, Spodoptera spp., Trichoplusia ni, Carpocapsa pomonella, Pieris spp., Chilo spp., Pyrausta nubilalis, Ephestia kuchniella, Galleria mellonella, Tincola bisselliella, Tinea pellionella, Hofmannophila pseudospretella, Cacoecia podana, Capua reticulana, Choristoneura fumiferana, Clysia ambiguella, Homona magnanima, Tortrix viridana, Chaphalocerus spp., Onlema oryzae. Aus der Ordnung der Colcoptera z.B. Anobium punctatum, Rhizopertha dominica, Brachidius obtectus, Acanthoscelides obleclus, Hylotrupes bajalus, Agelastica alni, Leptinotarsa decemlincata, Phacdon cochleariac, Diabrotica spp., Psylliodes chrysocephala, Epilachna varivestis. Atomaria spp., Oryzaephilus surinamensis, Anthonomus spp., Sitophilus spp., Otiorrhynehus sulcatus, Cosmopolites sordidus, Ceuthorrhynehus assimilis, Hypera postica, Dermestes spp., Trogoderma spp., Anthrenus spp., Attagenus spp., Lyctus spp., Meligethes acneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus. Aus der Ordnung der Hymenoptera z.B. Diprion spp., Hoptocampa spp., Lusius spp., Monomorium pharaonis, Vespa spp. Aus der Ordnung der Diptem z.B. Aedes spp., Anopheles spp., Calex spp., Drosophila melanogaster, Musca spp., Fannia spp., Calliphora crythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Uibio horlulanus, Oscinella fril, Phorbia spp., Pegomyia hyoscyami, Ceratitis capitata, Dacus oleae, Tipula paludosa, Hylemyia spp., Liriomyza spp.. Aus der Ordnung der Siphonaptem z.B. Xenopsylla cheopis, Ceratophyllus spp..

Erfindungsgemäß können alle Pflanzen und Pflanzenteite behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanxen können Pflanzen sein, die durch konventionelle Züchtungs- und Optimierungsmethoden oder durch biotechnologische und gentechnotogische Methoden oder Kombinationen dieser Methoden erhalten werden können, einschließlich der transgenen Pflanzen und einschließlich der durch Sortenschutzrechte schützbaren oder nicht schützbaren Planzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blütten, Fruchtkörper, Früchte und Samen sowie Wurzeln, Knollen und Rhizome aufgeführt werden. Zu den Pflanzenteilen gehört auch Ernlegut sowie vegetatives und generatives Vermehrungsmaterial, beispielsweise Steeklinge, Knollen, Rhizome, Ableger und Samen.

Hervorgehoben sci hierbei die besonders vorteilhafte Wirkung der erfindungsgemäßen Mittel hinsichtlich der Anwendung in Getreidepflanzen, wie z.B. Weizen, Hafer, Gerste, Dinkel, Triticale und Ruggen, aber auch in Mais, Hirse, Reis, Zuckerrohr, Soja, Sonnenblumen, Kartoffela, Baumwolle, Raps, Canola, Tabak, Zuckerrüben Futterrüben, Spargel, Hopfen sowie Obstpflanzen (umfassend Kermobst wie z.B. Äpfel und Birnen, Steinobst wie z.B. Pfirsiche, Nektarinen, Kirschen, Pflaumen und Aprikosen, Zitrusfrüchte wie z.B. Orangen, Grapefruits, Limetten, Zitronen, Kumquals, Mandarinen und Salsumas, Nüsse wie z.B. Pistazien, Mandela, Walnüsse und Pecannüsse, tropische Früchte wie z.B. Mango, Papaya, Ananas, Datteln und Bananen, und Weintrauben) und Gemüse (umfassend Hlattgemüse, wie z.B. Endivien, Feldsalat, Knollenfenchel, Kopf- und Pflücksalate, Mangold, Spinal und Zichoriensalat, Kohlgemüse wie z.B. Blumenkohl, Brokkoli, Chinakohl, Grünkohl (Winter- oder Krauskohl), Kohlrabi, Rosenkohl, Rotkohl, Weißkoht und Wirsing, Fruchtgemüse wie z.B. Auberginen, Gurken, Paprika, Speisckürbisse, Tomaten, Zucchini und Zuckermais, Wurzelgemüse wie z.B. Knollensellerie, Mairüben, Möhren, Gelbe Rüben, Radieschen, Retlich, Rote Rüben, Schwarzwurzeln und Stangensellerie, Hülsenfrüchte wie z.B. Erbsen und Bolmen sowie Zwiebelgemüse wie z.B. Lauch und Speisezwiebeln).

Die erfindungsgemäße Behandlung der Pflanzen und Pflanzenteile mit den Wirstoftkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Saatgut, weiterhin durch ein- oder mehrschichtiges Umhüllen.

Insbesondere eignen sich die erfindungsgemäßen Mischungen zur Behandlung von Saatgut. Bevorzugt sind dabei die vorstehend als bevorzugt oder besonders bevorzugt genannten erfindungsgemäßen Kombinationen zu nennen. So entsteht ein grofter Teil des durch Schüdlinge verursachten Schadens an Kulturpflanzen bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von Schädlingen durch die Bchandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufriedenstellend gelöst werden können. So ist es erstrebenswert, Verfahren zum Schutz des Saatguts und der keimenden Pflanze zu entwickeln, die das zuslitzliche Ausbringen von Pflanzenschutzmitteln nach der Sant oder nach dem Auflaufen der Pflanzen tiberflüssig machen. Es ist weiterhin erstrebenswert, die Menge des eingesetzten Wirkstoffs dahingehend zu optimieren, dass das Saatgut und die keimeude Pflanze vor dem Befall durch Schädlinge bestmöglich geschützt wird, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbezichen, um einen optimalen Schutz des Saatguts und auch der keimenden Pflanze bei einem minimalen Aufwand an Pflanzenschutzmitteln zu erreichen.

Die vorliegende Erfindung beziecht sich daher insbesondere auch auf ein Verfahren zum Schutz von Saatgut und keimenden Pflanzen vor dem Befall von Insekten, indem das Saatgut mit einem erfindungsgemäß Mittel behandelt wird. Die Erfindung bezieht sich obenfalls auf die Verwendung der erfindungsgemäßen Mittel zur Behandlung von Saatgut zum Schutz des Saatguts und der daraus entstehenden Pflanze vor Insekten, Weiterhin bezieht sich die Erfindung auf Saatgut, welches zum Schutz vor Insekten mit einem erfindungsgemäßen Mittel behandelt wurde.

Einer der Vorteile der vorliegenden Erfindung ist es, dass aufgrund der besonderen systemischen Eigenschaften der erfindungsgemäßen Mittel die Behandlung des Saatguts mit diesen Mitteln nicht nur das Saatgut selbst, sondern auch die daraus hervorgehenden Pflanzen nach dem Auflaufen vor Insekten schützt Auf diese Weise kann die umnittelbare Behandlung der Kultur zum Zeitpunkt der Aussaat oder kurz danach entfallen.

Ein weiterer Vorteil besteht in der synergistischen Erhölung der insektiziden Wirksamkeit der erfindungsgemäßen Mittel gegenüber dem insektiziden Einzelwirkstoff, die über die zu erwartende Wirksamkeit der beiden einzeln angewendeten Wirkstoffe hinausgeht.

Ebenso ist es als vorteilhaft anzusehen, dass die erfindungsgemäßen Mischungen insbesondere auch bei transgenem Saatgut eingesetzt werden können, wobei die aus diesem Saatgut hervorgehenden Pflanzen zur Expression eines gegen Schädlinge gerichteten Proteins befähigt sind. Durch die Behandlung solchen Saatguts mit den erfindungsgemäßen Mitteln können bestimmte Schädlinge bereits durch die Expression des z.B. insektiziden Proteins kontrolliert werden, und zusätzlich durch die erfindungsgemäßen Mittel vor Schäden bewahrt werden.

Die erfindungsgemäßen Mittel eignen sich zum Schutz von Saatgut jeglicher Pflanzensorte wie bereits vorstehend genannt, die in der Landwirtschaft, im Gewächshaus, in Forsten oder im Gartenbau eingesetzt wird. Insbesondere handelt es sich dabei um Saatgut von Mais, Erdnuss, Canola, Raps, Mohn, Soja, Baumwolle, Rübe (z.B. Zuckerrübe und Fulterrübe), Reis, Hirse, Weizen, Gerste, Hafer, Roggen, Sonnenblume, Tabak, Kartoffeln oder Gemüse (z.B. Tomaten, Kohlgewächs). Die erfindungsgemäßen Mittel eignen sich obenfalls zur Behandlung des Saatguts von Obstpflanzen und Gemäse wie vorstchend bereits genannt. Besondere Bedeutung kommt der Behandlung des Saatguts

von Mais, Soja, Haumwolle, Weizen und Canola oder Raps zu.

Wie vorstehend bereits erwähnt, kommt auch der Behandlung von transgenem Saatgut mit einem erfindungsgemäßen Mittel eine besondere Bedeutung zu. Dabei handelt es sich um das Saatgut von Pflanzen, die in der Regel zumindest ein heterologes Gen enthalten, das die Expression eines Polypeptids mit insbesondere insektiziden Eigensehaften steuert. Die heterologen Gene in transgenem Saatgut können dabei aus Mikroorganismen wie *Bacillus, Rhizobium, Pseudomonas, Serratia, Trichoderma, Clavibacter, Glomus* oder *Gilocludium* stammen. Die vorliegende Erfindung eignet sich besonders für die Behandlung von transgenem Saatgut, das zumindest ein heterologes Gen enthält, das aus *Bacillus sp.* slammt und dessen Genprodukt Wirksamkeit gegen Maiszünster und/oder Maiswurzel-Bohrer zeigt Besonders bevorzugt handelt es sich dabei um ein heterologes Gen, das aus *Bacillus thuringiensis stammt*.

Im Rahmen der vorliegenden Erfindung wird das erfindungsgemäßes Mittel alleine oder in einer geeigneten Formulierung auf das Saatgat aufgebracht. Vorzugsweise wird das Saatgut in einem Zustand behandelt, in dem so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde.

Im Allgemeinen muss bei der Behandlung das Saatguts darauf geachtet werden, dass die Menge des auf das Saatgut aufgebrachten erfindungsgemäßen Mittels und/oder weiterer Zusatzstofic so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxishe Effekte zeigen können.

Die erfindungsgemäßen Mittel können ummittelbar aufgebracht werden, also ohne weitere Komponenten zu enthalten und ohne verdünnt worden zu sein. In der Regel ist es vorzuzichen, die Mittel in Form einer geeigneten Formulierung auf das Saatgut aufzubringen. Geeignete Fermulierungen und Verfahren für die Saatgutbehandlung sind dem Fachmann bekannt und werden z.B. in den folgendn Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäßen Wirkstoffkombinationen können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestelt, z.B. durch Vennischen der Wirkstoffe mit Streckmitteln, also flüssigen Lösungsmitteln und/oder festen Trügerstoffen, gegebenenfalls unter Verwendung von oberflächenaktiven Mitteln, also Emulgiermitteln und/oder Dispergienmitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesemlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenechlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylissobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsatze und naturliche Gesteinsmehle, wie Kaoline, Tonerdon, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Caleil, Marmor, Bims, Sepiolith, Dolomil sowie synthetische Granulate aus anorganischen und organischen Mehlen sowie Granulate aus organishem Material wie Stigemehl, Kokosnußschalen, Maiskolben und Tabakstängeln; als Emulgier- und/oder schaumerzeugende Mittel kommen in Frage: z.B. nichtionogene und anionische Emulgatoren, wie Polyoxyethylen-Feltsäure-Ester, Polyoxyethylen-Feltalkohol-Ether, z.B. Alkylaryl-polyglykolether, Alkylsulfonate, Alkylsulfate, Arylsulfonate sowie Einweißhydrolysate; als Dispergiermittel kommen in Frage: z.B. Lignin-Sulfitablangen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide, Weitere Additive können mineralische und vegetabile Öle sein.

Es können Farbstoffe wie anorganische Pigmente, z.B. Eisenoxid, Titanoxid, Ferrocyanblan und organische Farbstoffe, wie Alizarin-, Azo- und Metallphthalocyaninfarbstoffe und Spurenuährstoffe wie Salze von Eisen, Mangan, Bor, Kupfer, Kobalt, Molybdän und Zink verwendet werden.

Die Formulierungen enthalten im Allgemeinen zwischen 0,1 und 95 Gew.-% Wirkstoff, vorzugswelse zwischen 0,5 und 90 %.

Die erfindungsgemäßen Wirkstoffkombinationen enthalten bevorzugt neben Pyraclostrobin und den genannten Neonicotinoiden der keine weiteren Wirkstoffe.

Die erfindungsgemäßen Wirkstoffkombinationen können gegebenenfalls in handelsüblichen Formulienungen sowie in den aus diesen Formulienungen bereiteten Anwendungsformen in Mischung mit noch anderen Wirkstoffen wie Insektiziden, Lockstoffen, Sterilantien, Bakteriziden, Akariziden, Nematiziden, Fungiziden, wachstunsregulierenden Stoffen oder Herbiziden vorliegen. Zu den Insektiziden zühlen beispielsweise Phosphorstäureester, Carbamate, Carbonsäurester, chlorierte Kohlenwasserstoffe, Phenylharnstoffe, durch Mikroorganismen hergestellte Stoffe u.a.

Besonders glinstige Mischpartner sind z.B. die folgenden:

Fungizide:

Aldimorph, Ampropylfos, Ampropylfos-Kalium, Andoprim, Anilazin, Azaconazol, Azoxystrobin, Benalaxyl, Benodanil, Benomyl, Benzamacril, Benzamacryl-isobutyl, Bialaphos, Binapacryl, Biphenyl, Biterianol, Blasticidin-S, Bromuconazol, Bupirinat, Buthiobat, Calciumpolysulfid, Capsimycin, Captafol, Captan, Carbendazim, Carboxin, Carvon, Chinomethionat (Quinomethionat), Chlobenthiazon, Chlorfenazol, Chloroneb, Chloropierin, Chlorothalonil, Chlozolinat, Clozylacon, Cufraneb, Cymoxanil, Cyproconazol, Cyprodinil, Cyprofuram, Debacarb, Dichlorophen, Diclobutrazol, Diclofluanid, Diclomezin, Dicloran, Dicthofencarb, Difenoconazol, Dimethirimol, Dimethomorph, Diniconazol, Diniconazol-M, Dinocap, Diphenylamin, Dipyrithione, Ditalimfos, Dithianon, Dodemorph, Dodine, Drazoxolon, Ediphenphos, Epoxiconazol, Etaconazol, Ethirimol, Etridiazol, Famoxadon, Fenapanil, Fenarinol, Fenbuconazol, Fenfuram, Fenitropan, Fenpiclonil, Fenpropidin, Fenpropimorph, Fentinacetat, Fentinhydroxyl, Ferbam, Ferimzon, Fluazinam, Flumetover, Fluoromid, Fluquinconazol, Flurprimidol, Flusilazol, Flusalfamid, Flutolanil, Flutriafol, Folpel, Fosetyl-Alminium, Fosethyl-Natrium, Fthalid, Fuberidazol, Furalaxyl, Furamelpyr, Furcarbomil, Furconazol, Furconazol-cis, Furanecyclox, Guazatin, Hexachlorobenzol, Hexaconazol, Hymexazol, Imazalil, Imibenconazol, Iminoctadin, Iminoctadinealbesilat, Iminoctadinetriacetat, Iodocarb, Ipconazol, Iprobenfos (IBP), Iprodione, Irumamycin, Isoprothiolan, Isovaledione, Kasugamyein, Kresoxim-methyl, Kupfer-Zubereitungen, wie: Kupferhydroxid, Kupfernaphtenat, Kupferoxychlorid, Kupfersulfat, Kupferoxid, Oxin-Kupfer und Bordeaux-Mischung, Mancopper, Mancozeb, Maneb, Meferimzone, Mepanipyrim, Mepronil, Metalaxyl, Melconazol, Methasulfocarb, Methfuroxam, Metiram, Metomeclam, Melsulfovax, Mildiomycin, Myclobutanil, Myclozolin, Nickel-dimethyldithiocarbamat, Nitrothal-isopropyl, Nuarimol, Ofurace, Oxadixyl, Oxamocarb, Oxolinicacid, Oxycarboxim, Oxyfenthiln, Paclobutrazol, Pefurazoat, Penconazol, Peneyeuron, Phosdiphen, Pimaricin, Piperalin, Polyoxin, Polyoxorim, Probenazol, Prochloraz, Procymidon, Propamocarb, Propanosine-Natrium, Propiconazol, Propineb, Pyrazophos, Pyrifenox, Pyrimethanil, Pyroquilon, Pyroxyfur, Quinconazol, Quintozen (PCNB), Schwefel und Schwefel-Zubereitungen, Tebuconazol, Tecloflalam, Tecnazen, Telecyclacis, Tetraconazol, Thiabendazol, Thicyofen, Thifluzamide, Thiophanate-methyl, Thiram, Tioxymid, Toletofos-methyl, Tolylfluanid, Triadimefon, Triadimenol, Triazbutil, Triazoxid, Trichlamid, Tricyclazol, Tridemorph, Triflumizol, Triforin, Triticonazol, Uniconazol, Validamycin A, Vinclozolin, Viniconazol, Zarilamid, Zineb, Zimm,

sowie Dagger G, OK-8705, OK-8801, α-(1,1-Dimethylethyl)-β-(2-phenoxyethyl)-1H-1,2,4-triazol-1-ethanol, α-(2,4-Dichlorphenyl)-β-fluor-b-propyl-1H-1,2,4-triazol-1-ethanol, α-(2,4-Dichlorphenyl)-β-methoxy-a-methyl-1H-1,2,4-triazol-1-ethanol, α-(5-Methyl-1,3-dioxan-5-yl)-β-[[4-(trifluoromethyl)-phenyl]-methylen]-1H-1,2,4-triazol-1-ethanol, (5RS,6RS)-6-Hydroxy-2,2,7,7-tetramethyl-5-(1H-1,2,4-triazol-1-yl)-3-octanon, (E)-a-(Methoxyimino)-N-methyl-2-phenoxy-phenylacetamid, {2-Methyl-1-[[[1-(4-methylphenyl)-ethyl]-amino]-carbonyl]-propyl}-carbaminsiture-1-isopropylester 1-(2,4-Dichlorphenyl)-2-(1H-1,2,4-triazol-1-yl)-ethanon-O-(phenylmethyl)-oxin, 1-(2-Methyl-1-naphthalenyl)-1H-pyrrol-2,5-dion, 1-(3,5-Dichlorphenyl)-3-(2-propenyl)-2,5-pyrrolidindion, 1-[(Diiodmethyl)-sulfonyl]-4-methyl-benzol, 1-[[2-(2,4-Dichlorphenyl)-1,3-dioxolan-2-yl]-methyl]-1H-imidazol, 1-[[2-(4-Chlorphenyl)-3-phenyloxiranyl]-methyl]-1H-1,2,4-triazol, 1-[1-[2-[(2,4-Dichlorphenyl)-methoxy]-phenyl]-ethenyl]-1H-imidazol, 1-Methyl-5-nonyl-2-(phenylmethyl)-3-pyrrolidinol, 2',6'-Dibrom-2-methyl-4'-trifluormethoxy-4'-trifluor-methyl-1,3-thiazol-5-carboxanilid, 2,2-Dichlor-N-[1-(4-chlorphenyl)-ethyl]-1-ethyl-3-melhyl-cyclopropancarboxamid, 2,6-Dichlor-5-(me thylthio)-4-pyrimidinyl-thiocyanat, 2,6-Dichlor-N-(4-trifluormethylbenzyl)-benzamid, 2,6-Dichlor-N-[[4-(trifluormethyl)-phenyl[-methyl]-benzamid, 2-(2,3,3-Triiod-2-propenyl)-2H-tetrazol, 2-[(1-Methylethyl)-sulfonyl]-5-(trichlormethyl)-1,3,4-thiadiazol, 2-[[6-Deoxy-4-O-(4-O-methyl-β-D-glycopyranosyl)-a-D-glucopyranosyl]-amino]-4-methoxy-1H-pyrrolo[2,3-d]pyrimidin-5-carbonitril, 2-Aminobutan, 2-Brom-2-(bromethyl)-pentandinitril, 2-Chlor-N-(2,3-dihydro-1,1,3-trimethyl-1H-inden-4-yl)-3-pyridincarboxamid, 2-Chlor-N-(2,6-dimethylphenyl)-N-(isothiocyanatomethyl)-acatemid, 2-Phenylphenol(OPP), 3,4-Dichlor-1-[4-(difluormethoxy)-phenyl]-1H-pyrrol-2,5-dion, 3,5-Dichlor-N-[cyan[(1-methyl-2-propynyl)-oxy]-methyl]-benzamid, 3-(1,1-Dimethylpropyle-1-oxo)-1H-indem-2-carbonitril, 3-[2-(4-Chlorphenyl)-5-ethoxy-3-isoxazoldinyl]-pyridin, 4-Chlor-2-cyan-N,N-dimethyl-5-(4-methylphenyl)-1H-imidazol-1-sulfonamid, 4-Methyl-tetrazolo[1,5-a]quinazolin-5(4H)-n, 8-(1,1-Dimethylethyl)-N-ethyl-N-propyl-1,4-dioxaspiro [4.5]decan-2-methanamin, 8-Hydroxychinolinsulfat, 9H-Xanthen-9-carbonsäure-2-[(phenylamino)-carbonyl]-hydra

zid, bis-(1-Methyl, ethyl)-3-methyl-4-[(3-methylbenzoyl)-oxy]-2,5-thiophendicarboxylat, cis-1-(4-Chlorphenyl)-2-(1H-1,2,4-triazol-1-yl)-cycloheptanol, cis-4-[3-[4-(1,1-Dimethylpropyl)-phenyl-2·methylpropyl]-2,6-dimethyl-morpholin-hydrochlorid, Ethyl-[(4-chlorphenyl)-azo]-cyanoacelat, Kaliumhydrogencarbonat, Methantetrathiol-Natriumsalz, Methyl-1-(2,3-dihydro-2,2-dimethyl-1H-inden-1-yl)-1H-imidazol-5-carboxylat, Methyl-N-(2,6-dimethylphenyl)-N-(5-isoxazolycarbonyl)-DL-alaninat, Methyl-N-(chloracetyl)-N-(2,6-dimethylphenyl)-DL-alaninat, N-(2,3-Dichlor-4-hydroxyphenyl)-1-methyl-cyclohexancarboxamid, N-(2,6-Dimethylphenyl)-2-methoxy-N-(tetrahydro-2-oxo-3-furanyl)-acetamid, N-(2,6-Dimethylphenyl)-2-methoxy-N-(tetrahydro-2-oxo-3-thienyl)-acetamid, N-(2-Chlor-4-nitrophenyl)-4-methyl-3-nitro-benzolsulfonamid, N-(4-Cyclohexylphenyl)-1,4,5,6-tetrahydro-2-pyrimidinamin, N-(4-Hexylphenyl)-1,4,5,6-tetrahydro-2-pyrimidinamin, N-(5-Chlor-2-methyl-phenyl)-2-methoxy-N-(2-oxo-3-oxazolidinyl)-acetamid, N-(6-Methoxy)-3-pyridinyl)-cyclopropancarboxamid, N-(2,2,2-Trichlor-1-[(chlomcetyl)-amino]-ethyl]-benzamid, N-[3-Chlor-4,5-bis-(2-propinyloxy)-phenyl]-N'-methoxy-methanimidamid, N-Fonnyl-N-hydroxy-DL-alanin -Natriumsatz, O,O-Diethyl-[2-(dipropylamino)-2-oxoethyl]-ethylphosphoramidothioat, O-Methyl-S-phenyl-phenylpropylphosphoramidothioate, S-Methyl-1,2,3-benzothiadiazol-7-carbothioat, spiro[2H]-1-Benzopyran-2,1'(3'H)-isobenzofuran]-3'-on.

Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloflalam, Kupfersulfat und andere Kupfer-Zubereitungen.

Inseltizide/Alcarizide/Nematizide:

Abamcetin, ABG-9008, Acephate, Acequinocyl, Acetamiprid, Acetoprole, Acrinathrin, AKD-1022, AKD-3059, AKD-3088, Alanycarb, Aldicarb, Aldoxycarb, Allethrin, Alpha-Cypermethrin (Alphamethrin), Amidoflumet, Aminocarb, Amitmz, Avennectin, AZ-60541, Azadirachtin, Azamethiphos, Azinphos-methyl, Azinphos-ethyl, Azocyclotin, Bacillus popilliae, Bacillus sphaericus, Bacillus subtilis, Bacillus thuringiensis, Bacillus thuringiensis strain EG-2348, Bacillus thuringiensis strain GC-91, Bacillus thuringiensis strain NCTC-11821, Baculoviren, Beauveria bassiana, Beauveria tenella, Benclothiaz, Bendiocarb, Benfuracarb, Bensultap, Benzoximate, Deta-Cyfluthrin Beta-Cypermethrin, Bifenazate, Bifenthrin, Binapacryl, Bioallethrin, Bioallethrin-S-cyclopentyl-isomer, Bioethanomethrin, Biopermethrin, Bioresmethrin, Bistrifluron, DPMC, Brofenprox, Bromophos-ethyl, Bromopropylate, Bromfenvinfos (-methyl), HTG-504, BTG-505, Bufencarb, Buprofezin, Butathiofos, Butocarboxim, Butoxycarboxim, Butylpyridaben, Cadusafos, Camphechlor, Carbaryl, Carbofuran, Carbophenothion, Carbosulfan, Cartap, CGA-50439, Chinomethionat, Chlordane, Chlordimeform, Chloethocarb, Chlorethoxyfos, Chlorfenapyr, Chlorfenviaphos, Chlorfluazuron, Chlonnephos, Chlorobenzilate, Chloropierin, Chlorproxyfen, Chlorpyrifos-methyl, Chlorpyrifos (-ethyl), Chlovaporthrin, Chromafenoxide, Cis-Cypenuethrin, Cis-Resmethrin, Cis-Permethrin, Clocythrin, Cloethocarb, Clofentezine, Clothianidin, Clothiazoben, Codlemone, Coumaphos, Cyanofenphos, Cyanophos, Cycloprene, Cycloprothrin, Cyfluthrin, Cyflumetofen, Cyhalotrin, Cyhexatin, Cypermethrin, Cyphenothrin (IR-trans-isomer), Cyromazine, DDT, Deltamethrin, Demeton-S-methyl, Dimeton-S-methylsulphon, Diafenthiaron, Dialifos, Diazinon, Dichlofenthion, Dichlorvos, Dicofol, Dicrotophos, Dicyclanil, Diflubenzuron, Dimefluthrin, Dimethoate, Dimethylvinphos, Dinobuton, Dinocap, Dinotefuran, Diofenolan, Disulfoton, Docusalsodium, Dofenapyn, DOWCO-439, Eflusilanate, Emameclin, Emamectin-benzoate, Empenthrin (IR-isomer), Endosulfan, Entomopthora spp., EPN, Esfenvalemic, Ethiofencarb, Ethion, Ethiprole, Ethoprophos, Etofonprox, Etoxazole, Etrimfos, Famphur, Fenamiphos, Fenazaquin, Fenbutalin oxide, Fenfluthrin, Fenitrothion, Fenobucarb, Fenothiocarb, Fenoxacrim, Fenoxycarb, Fenpropathrin, Fenpyrad, Fenpyrithrin, Fenpyroximate, Fensulfothion, Fenthion, Fentrifanil, Fenvalerate, Fipronil, Flonicamid, Fuacrypyrim, Fluazuron, Flubendiamide, Flubenzimine, Flubrocythrinate, Flucycloxuron, Flucythrinate, Flufencrim, Flufenoxuron, Flufenprox, Flumethrin, Flupyrazofos, Flutenzin (Flufenzine), Fluvalinate, Fonofos, Formetanate, Formothion, Fosmethilan, Fosthiazate, Fubfenprox (Fluproxyfen), Furathiocarb, Gamma-Cyhalothrin, Gamma-HCH, Gossyplure, Grandlure, Granuloseviren, Halfenprox, Halofenozide, HCH, HCN-801, Heptenophos, Hexaflumuron, Hexythiazox, Hydramethylnone, Hydroprene, IKA-2002, Imidacloprid, Imiprothrin, Indoxacarb, Iodofenphos, Iprobenfos, Isazofos, isofenphos, Isoprocarb, Isoxathion, Ivermectin, Japonilure, Kadethrin, Kernpolyederviren, Kinoprene, Lambda-Cyhalothrin, Lindane, Lufenuron, Malathion, Mecarbam, Mesulfenfos, Metaldehyd, Metam-sodium, Methacrifos, Methamidophos, Metharhizium anisopliac, Metharhizium flavoviride, Methidathion, Methiocarb, Methomyl, Methoprene, Methoxychlor, Methoxyfenozide, Metofluthrin, Metolcarb, Metoxadiaxone, Mcvinphos, Milbemectin, Milbemycin, MKI-245, MON-45700, Monocrotophos, Moxidectin, MTI-800, Naled, NC-104, NC-170, NC-184, NC-194, NC-196, Niclosamide, Nicotine, Nitenpyram, Nithiazinc, NNI-0001, NNI-0101, NNI-0250, NNI-9768, Novaluron, Noviflumuron, OK-5101, OK-5201, OK-9601, OK-9602, OK-9701, OK-9802, Omethoate, Oxamyl, Oxydemeton-methyl, Paecilomyces fumosoroscus, Parathion-methyl, Parathion (-ethyl),

Permethrin (cis-, trans-), Petroleum, PH-6045, Phenothrin (IR-trans isomer), Phenthoate, Phorate, Phosalone, Phosmet, Phosphamidon, Phosphocarb, Phoxim, Piperonyl butoxide, Pirimicarb, Pirimiphos-methyl, Pirimiphos-ethyl, Potassium oleate, Prallethrin, Profenofos, Profluthrin, Promecarb, Propaphos, Propargite, Propetamphos, Propoxur, Prothiofos, Prothoate, Protrifenbute, Pymetrozine, Pyraclofos, Pyrafluprole, Pyresmethrin, Pyrethrum, Pyridaben, Pyridalyl, Pyridaphenthion, Pyridathion, Pyrimidifen, Pyriprole, Pyriproxyfen, Quinalphos, Resmethrin, RH-5849, Ribavirin, RU-12457, RU-15525, S-421, S-1833, Salithion, Sebufoss, SI-0009, Silafluofen, Spinosad, Spirodiclufen, Spiromesifen, Sulfluramid, Sulfotep, Sulprufos, SZI-121, Tau-Fluvalinate, Tebufenozide, Tebufenpyrad, Tebupirimfos, Teflubenzuron, Tefluthrin, Temephos, Temivinphos, Terbam, Terbufos, Tetrachlorvinphos, Tetradifon, Tetramethrin, Tetramethrin (IR-isomer), Tetrasul, Theta-Cypermethrin, Thiacloprid, Thlamethoxam, Thiapronil, Thiatriphos, Thiocyctam hydrogen oxalate, Thiodicarb, Thiofanox, Thiometon, Thiosultap-sodium, Thuringiensin, Tolfenpyrad, Tralocythrin, Tralomethrin, Transfluthrin, Triarathene, Triazamate, Triazophos, Triazuron, Trichlophenidine, Trichlorfon, Triflumuron, Trimethacarb, Vamidothion, Vaniliprole, Verbutin, *Verticillium lecanii*, WL-108477, WL-40027, YI-5201, YI-5301, YI-5302, XMC, Xylylcarb, ZA-3274, Zeta-Cypermethrin, Zolaprofos, ZXI-8901, die Verbindung 3-Methyl-phenyl-propylcarbamat (Tsamacide Z), die Verbindung 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg-Nr. 185984-60-5) (vgl. WO-96/37494, WO-98/25923), sowie Präparate, welche insektizid wirksame Pflanzenextrakte, Nematoden, Pilze oder Viren enthalten.

Auch eine Mischung mit anderen bekannten Wirkstoffen, wie Herbiziden oder mit Düngemitteln und Wachstumsregulatoren ist möglich.

Die erfindungsgemäßen Wirkstofikombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Dereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten ublichen Weise.

Bei der Anwendung gegen Hygiene- und Vorratsschädlinge zeichnen sich die Wirkstoftkombinationen durch eine hervormgende Residualwirkung auf Holz und Ton sowie durch eine gate Alkalistabilität auf gekälkten Unterlagen aus.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Ganz besonders bevorzugt handelt es sich bei dem vor Insektenbefall zu schützenden Material um Holz und Holzverarbeitungsprodukte.

Unter Holz und Holzverarbeitungsprodukten, welche durch das erfindungesgemäße Mittel bzw. dieses enthaltende Mischungen geschützt werden kann, ist beispielhaft zu versichen:

Bauholz, Holzbalken, Eisenbalmschwellen, Brückenteile, Booststege, Holzfahrzeuge, Kisten, Paletten, Container, Telefonmasten, Holzverkleitungen, Holzfenster und -türen, Sperrholz, Spanplatten, Tischlerarbeiten oder Holzprodukte, die ganz allgemein beim Hausbau oder in der Baulioschlerei Verwendung finden.

Die Wirkstoffkombinationen können als solche, in Form von Konzentriten oder allgemein üblichen Formulierungen wie Pulver, Granulate, Lösungen, Suspensionen, Emulsionen oder Pasten angewendet werden.

Die genannten Formulierungen können in an sich bekannter Weise hergestellt werden, z.B, durch Vermischen der Wirkstoffe mit mindestens einem Lösungs- bzw. Verdünnungsmittel, Emulgator, Dispergier- und/oder Binde- oder Fixiermittels, Wasser-Repellent, gegebenenfalls Sikkative und UV-Stabilisatoren und gegebenenfalls Farbstoffen und Pigmenten sowie weiteren Verarbeitungshilfsmitteln.

Die zum Schutz von Holz und Holzwerkstoffen verwendeten insektiziden Mittel oder Konzentrate enthalten den erfindungsgemäßen Wirkstoff in einer Konzentration von 0,0001 bis 95 Gew.-%, insbesondere 0,001 bis 60 Gew.-%.

Die Menge der eingesetzten Mittel bzw. Konzentrate ist von der Art und dem Vorkommen der Insekten und von dem Medium abhängig. Die optomate Einsatzmenge kann bei der Anwendung jeweils durch Testreihen ermittelt werden. Im allgemeinen ist es jedoch ausreichend 0.0001 bis 20 Gew.-%, vorzugsweise 0,001 bis 10 Gew.-%, des Wirkstoffs, bezogen auf das zu schützende Material, einzusetzen.

Als Lösungs- und/oder Verdünnungsmittel dient ein organisch-chemisches Lösungsmittel oder Lösungsmittelgemisch und/oder ein öliges oder ölarliges schwer flüchtiges organisch-chemisches Lösungsmittel oder Lösungsmittelgemisch und/oder ein polares organisch-chemisches Lösungsmittel oder Lösungsmittelgemisch und/oder Wasser und

gegebenenfalls einen Emulgator und/oder Netzmittel.

Als organisch-chemische Lösungsmittel werden vorzugsweise ölige oder ölartige Lösungsmittel mit einer Verdunstungszahl über 35 und einem Flammpunkt oberhalb 30°C, vorzugsweise oberhalb 45°C, eingesetzt. Als derartige schwerflüchtige, wasserunlösliche, ölige und ölartige Lösungsmittel werden entsprechende Mineralöle oder deren Aromatenfraktionen oder mineralölhaltige Lösungsmitelgemische, vorzugsweise Testbenzin, Petroleum und/oder Alkylbenzol verwendet.

Vorteilhaft gelangen Mineralöle mit einem Siedebereich von 170 bis 220°C, Testbenzin mit einem Siedebereich von 170 bis 220°C, Spindetöl mit einem Siedebereich von 250 bis 350°C, Petroleum bzw. Aromaten vom Siedebereich von 160 bis 280°C, Terpentinöl und dgl. zum Einsatz.

In einer bevorzugten Ausführungsform werden flüssige aliphatische Kohlenwasserstoffe mit einem Siedebereich von 180 bis 210°C oder hochsiedende Gemische von aromatischen und aliphatischen Kohlenwasserstoffen mit einem Siedebereich von 180 bis 220°C und/oder Spindeöl und/oder Monochlornaphthalin, vorzugsweise $\alpha$-Monochlornaphthalin, verwendet.

Die organischen schwerflüchtigen öligen oder ölartigen Lösungsmittel mit einer Verdunstungszahl über 35 und einem Flammpunkt oberhalb 30°C, vorzugsweise oberhalb 45°C, können teilweise durch leicht oder mittelflüchtige organisch-chemische Lösungsmittel ersetzt werden, mit der Maßgabe, dass das Lösungsmittelgemisch ebenfalls eine Verdunstungszahl über 35 und einen Flammpunkt oberhalb 30°C, vorzugsweise oberhalb 45°C, aufweist und dass das Insektizid-Fungizid-Gemisch in diesem Lösungsmittelgemisch löslich oder emulgierbar ist.

Nach einer bevorzugten Ausführungsform wird ein Teil des organisch-chemischen Lösungsmittel oder Lösungsmittelgemisches durch ein aliphatisches polares organisch-chemisches Lösungsmittel oder Lösungsmittelgemisch ersetzt. Vorzugsweise gelangen Hydroxyl- und/oder Ester- und/oder Ethergruppen enthaltende aliphatische organisch-chemische Lösungsmittel wie beispielsweise Glycolether, Ester oder dgl. zur Anwendung.

Als organisch-chemische Bindemittel werden im Rahmen der vorliegenden Erfindung die an sich bekannten wasserverdünnbaren und/oder in den eingesetzten organisch-chemischen Lösungsmitteln löslichen oder dispergier- bzw. emulgierbaren Kunstharze und/oder bindende trocknende Öle, insbesondere Bindemittel bestehend aus oder enthaltend ein Acrylatharz, ein Vinylharz, z.B. Polyvinylacetat, Polyesterharz, Polykondensations- oder Polyadditionsharz, Polyurethanharz, Alkydharz bzw. modifiziertes Alkydharz, Phenolharz, Kohlenwasserstoffharz wie Inden-Cumaronharz, Siliconharz, trocknende pflanzliche und/oder trocknende Öle und/oder physikalisch trocknende Bindemittel auf der Basis eines Natur- und/oder Kunstharzes venwendet.

Das als Bindemittel verwendete Kunstharz kann in Form einer Emulsion, Dispersion oder Lösung, eingesetzt werden. Als Bindemittel können auch Bitumen oder bituminöse Substanzen bis zu 10 Gew.-%, verwendet werden. Zusätzlich können an sich bekannte Farbstoffe, Pigmente, wasserabweisende Mittel, Geruchskorrigentien und Inhibitoren bzw. Korrosionsschutzmittel und dgl. eingesetzt werden.

Bevorzugt ist gemäß der Erfindung als organisch-chemische Bindemittel mindestens ein Alkydharz bzw. modifiziertes Alkydharz und/oder ein trocknendes pflanzliches Öl im Mittel oder im Konzentrat enthalten. Bevorzugt werden gemäß der Erfindung Alkydharze mit einem Ölgelhalt von mehr als 45 Gew.-%, vorzugsweise 50 bis 68 Gew.-%, verwendet.

Das erwähate Bindemittel kann ganz oder teilweise durch ein Fixierungsmittel(gemisch) oder ein Weichmacher(gemisch) ersetzt werden. Diese Zusätze sollen einer Verflüchtigung der Wirkstoffe sowie einer Kristallisation bzw. Ausflülen vorbeugen. Vorzugsweise ersetzen sie 0,01 bis 30 % des Bindemittels (bezogen auf) 100 % des eingesetzten Bindemittels).

Die Weichmacher stammen aus den chemischen Klassen der Phthalsäureester wie Dibutyl-, Dioclyl- oder Benzylbutylphthalat, Phosphorsäureester wie Tributylphosphat, Adipinsäureester wie Di-(2-ethylhexyl)-adipat, Stearate wie Butylstearat oder Amylstearat, Oleate wie Butyloleat, Glycerinether oder höhermolekulare Glykolether, Glycerinester sowie p-Toluolsulfonsäureester.

Fixierungsmittel basieren chemisch auf Polyvinylalkylethern wie z.B. Polyvinylmethylether oder Ketonen wie Benzophenon, Ethylenbenzophenon.

Als Lösungs- bzw. Verdünnungsmittel kommt insbesondere auch Wasser in Frage, gegebenenfalls in Mischung mit einem oder mehreren der oben genannten organisch-chemischen Lösungs- bzw. Verdünnungsmittel, Emulgatoren und Dispergatoren.

Ein besonders effektiver Hotzschutz wird durch großtechnische Imprägnierverfahren, z.B. Vakuum, Doppelvakuum oder Druckverfahren, erzielt.

Die anwendungsfertigen Mittel können gegebenenfalls noch weitere Insektizide und gegebenenfalls noch ein oder mehrere Fungizide enthalten.

Die erfindungsgemäßen Wirkstoffkombinationen eignen sich zur Bekämpfung von Insekten, die in geschlussenen Räumen, wie beispielsweise Wohnungen, Fabrikhallen, Bäros, Fahrzeugkabinen u.ä. vorkommen. Sie können zur Bekämpfung dieser Sehädlinge allein oder in Kombination mit anderen Wirk- und Hilfsstoffen in Haushaltsinsecktizid-Produkten verwendet werden. Sie sind gegen sensible und resisteate Arten sowie gegen alle Entwicklungsstadien

wirksam. Zu diesen Insektengehüren:

Aus der Ordnung der Zygentoma z.B. Clenolepisma spp., Lcpisma saccharina, Lepismodes inquilinus. Aus der Ordnung der Blattaria z.B. Blatta orientalies, Blattella germanica, Blattella asahinai, Leucophaca maderae, Panchlora spp., Parcoblatta spp., Periplaneta australasiac, Periplaneta americana, Periplaneta brunnea, Periplaneta fuliginosa, Supella longipalpa. Aus der Ordnung der Saltatoria z.B. Achein domesticus. Aus der Ordnung der Dermaptera z.B. Forficula auricularin. Aus der Ordnung der Isoptera z.B. Kalotennes spp., Reticulitermes spp., Aus der Ordnung der Psocoptera z.B. Lepinatus spp., Liposcelis spp., Aus der Ordnung der Coleptera z.B. Anthrenus spp., Atingenus spp., Dermestes spp., Latheticus oryzac, Necrobia spp., Ptinus spp., Rhizopertha dominica, Sitophilus germarius, Sitophilus oryzae, Sitophilus zeamais, Stegobium paniceum. Aus der Ordnung der Diptera z.B. Aedes negypti, Aedes albupictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sancophaga carnaria, Simulium spp., Stomoxys calcitrans, Tipula paludosa. Aus der Ordnung der Lepidoptera z.B. Achroia grisella, Galleria mellonella, Plodia il1terpl1m:lelht, Tinea cloacella, Tinea pellionella, Tineola bisselliella. Aus der Orlnung der Siphonaptera z.B. Ctenocephalides canis, Ctenocephalides felis, Pulex irritans, Tunga penetrans, Xenopsylla cheopis. Aus der Ordnung der Hymenoptera z.B. Camponotus herculeanus, Lasius fuliginosus, Lasius niger, Lasius umbralus, Monomorium pharaonis, Paravespula spp., Tetramorium caespitum. Aus der Ordnung der Anoplura z.B. Pediculus humanus capitis, Pediculus humanus corporis, Phthirus pubis. Aus der Ordnung der Heteroptera z.B. Cimex hemipleras, Cimex lectularius, Rhodinus prolixus, Triatoma infestans.

Die Anwendung im Bereich der Haushaltsinsektizide kann auch in Kombination mit anderen geeigneten Wirkstoffen wie Phosphorsäureestern, Carbamaten, Pyrethroiden, Wachstunsregulatoren oder Wirkstoffen aus anderen bekannten Inscktizidklassen erfolgen.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferpläuchen aus Cellulose oder Kunststoff, Flüssigverdampfern, Gel- und Membranverdampfern, propellergetriebenen Verdampfern, energielosen bzw. passiven Verdampfungssystemen, Mottenpapieren, Mottensäckehen und Mottengelen als Granulate oder Stäube, in Streuködern oder Köderstationen.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha.

Die gate insektizide Wirkung der erfindungsgemäßen Wirkstoffkombinationen geht aus den nach. folgenden Beispielen hervor. Während die einzelnen Wirkstoffe in der Wirkung Schwtichen aufweisen, zeigen die Kombinationen eine Wirkung, die über eine einfache Wirkungssummierung hinausgeht.

Berechnungsfonnel für den Abtötungsgrad einer Kombination aus zwei Wirkstoffen

Die zu erwariende Wirkung für eine gegebene Kombination zweier Wirkstoffe kann (vgl. COLBY, S.R.; "Caculating Synergistic and Antagonistic Responses of Herbicide Combinations", Weeds 15. Seiten 20-22, 1967); berechnet werden:

Wenn

X = den Abtötungsrad, ausgedrückt in % der unbchaudelten Kontrolle, beim Einsatz des Wirkstoffes A in einer Aufwandinenge von m ppm,

Y = den Abtötungsrad, ausgedrückt in % der unbehaudelten Kontrolle, beim Einsatz des Wirkstoffe B in einer Aufwandmenge von n ppm,

E = den Abtütungsrad, ausgedrückt in % der unbehandelten Kontrolle, beim Einsatz des Wirkstoffes A und B in Aufwandmengen von m und n ppm bedeutet,

dann ist

$$E = X + Y - \frac{X \times Y}{100}$$

Ist die tatsächliche inscktizide Abtölungsgrad größer als berechnet, so ist die Kombination in ihrer Abtütung

überadditiv, d.h. es liegt ein synergistischer Effekt vor. In diesem Falt muss der tatsächlich beobachtete Abtötungsgrad größer sein als der aus der oben angefährten Formel errechnete Wert für den erwarteten Abtölungsgrad (E).

**Beispiel A**

**Myzus perslene -Test**

| | |
|---|---|
| Lösungmittel: 7 | Gewichtsteile Dimethyformamid |
| Emulgator: 2 | Gewichtsteile Alkylarylpolyglykolether |

Zur Herstellullg einer zweckmäfligen Wirkstoffzubereitung vermischt man 1 Gewichtsteil Wirkstoff mit den angegebenen Menge Lösungsmittel und Emulgator und verdünnt das Konzentrat mit emulgatorhaltigem Wasser auf die gewänschte Konzentration.

Kohlblätter (*Brassica oleracea*), die stark von der Grünen Pfirsichblattlaus (*Myzus persicae*) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach der Colby-Fonnel.

Bei diesem Test zeigt z. B. die folgende Wirkstoffkombination gemäß vorliegender Anmeldung eine synergistisch verstärkte Wirksamkeit im Vergleich zu den einzeln angewendeten Wirkstoffen:

**Tabelle A2**

Pflanzenschädigende Insekten

Myzus perslene - Test

| Wirkstoff | Konzentration in ppm | Abtölung in % nach 6 Tagen | |
|---|---|---|---|
| Clothianidin | 0,8 | 30 | |
| Pyraclostrobin | 100 | 35 | |
| Clothianidin + Picoxystrobin (1 : 125) | | gef.* | her.** |
| | 0,8 + 100 | 85 | 54,5 |

o gef. = gefundene Wirkung
** bcr. = nach der Colby-Formel berechnete Wirkung

**Patentansprüche**

1. Verwendung eines Mittels umfassend eine synergistisch insektizid wirksame Mischung zumindest einer Verbindung ausgewählt aus

   (a) Clothianidin, Imidacloprid, Thiacloprid, Acetamiprid
   und
   (b) Pyraclostrobin

   zur Anwendung an Pflanzen, ausgewählt aus:

   Getreidepflanzen, Mais, Hirse, Reis, Zuckerrohr, Soja, Sonnenblumen, Kartoffeln, Baumwolle, Raps, Canola, Tabak, Zuckerrüben, Futterrüben, Spargel, Hopfen, Obstpflanzen oder Gemüse.

2. Mittel umfassend eine synergistisch insektizid wirksame Mischung zumindest einer Verbindung ausgewählt aus

   (a) Clothianidin, Thiacloprid, Acetamiprid
   und
   (b) Pyraclostrobin

3. Mittel gemäß Anspruch 2, **dadurch gekennzeichnet, dass** es eine synergistisch wirksame Mischung von Clothianidin und Pyraclostrobin, umfasst.

4. Mittel gemäß Anspruch 2, **dadurch gekennzeichnet, dass** es eine synergistisch wirksame Mischung von Thiacloprid und Pyraclostrobin umfasst.

5. Mittel gemäß Anspruch 2, **dadurch gekennzeichnet, dass** es eine synergistisch wirksame Mischung von Acetamiprid und Pyraclostrobin, umfasst.

6. Mittel gemäß einem der Ansprüche 2 bis 5, **dadurch gekennzeichnet, dass** das Gewichtsverhältnis des Wirkstoffs der Gruppe (a) zum Wirkstoff der Gruppe (b) gemäß Anspruch 1 zwischen 1000:1 und 1:100 liegt.

7. Verwendung eines Mittels gemäß einem der Ansprtiche 2 bis 6 zur Behandlung von Saatgut.

8. Verwendung eines Mittels gemäß einem der Ansprüche 2 bis 6 zur Bekämpfung von Insekten, die Pflanzen oder Saatgut befallen.

9. Verfahren zum Schutz von Saatgut und Pflanzen gegen Insekten, **dadurch gekennzeichnet, dass** man das Saagut mit einem Mittel gemäß einem der Ansprüche 2 bis 6 behandelt.

10. Verfahren zum Bekämpfen von Insekten, **dadurch gekennzeichnet, dass** man Mittel gemäß einem der Ansprüche 2 bis 6 auf die Insekten und/oder ihren Lebensraum einwirken lässt.

11. Verfahren zur Herstellung von Insektenbekämpfungsmitteln, **dadurch gekennzeichnet, dass** man eine synergistisch insektizid wirksame Mischung gemäß einem der Ansprüche 2 bis 6 mit Streckmitteln und/oder oberflächenaktiven Substanzen vermischt.

12. Saatgut, **dadurch gekennzeichnet, dass** es mit einem Mittel gemäß einem der Ansprüche 2 bis 6 behandelt ist und eine effektive Menge des Mittels enthält.

13. Verwendung eines Mittels umfassend eine synergistisch insektizid wirksame Mischung zumindest einer Verbindung ausgewählt aus

(a) Clothianidin, Imidacloprid, Thiacloprid, und
(b) Pyraclostrobin zum Schutz des Saatgutes von Pflanzen gegen Insekten ausgewählt aus:

Getreidopflanzen, Mais, Hirse, Reis, Zuckerrohr, Soja, Sonnenblumen, Kartoffeln, Baumwolle, Raps, Canola, Tabak, Zuckerrüben, Futterrüben, Spargel, Hopfen, Obstpflanzen oder Gemüse.

**Claims**

1. Use of a composition comprising a synergistically insecticidally effective mixture of at least one compound selected from the group consisting of

(a) clothianidin, imidacloprid, thiacloprid, acetamiprid,
and
(b) pyraclostrobin,

for application to plants selected from the group consisting of:

cereal plants, corn, millet, rice, sugar cane, soybeans, sunflowers, potatoes, cotton, oilseed rape, canola, tobacco, sugar beet, fodder beet, asparagus, hops, fruit plants and vegetables.

2. Composition comprising a synergistically insecticidally effective mixture of at least one compound selected from the group consisiting of:

(a) clothianidin, thiacloprid, acetamiprid

and
(b) pyraclostrobin,

3. Composition according to Claim 2, **characterized in that** it comprises a synergistically effective mixture of clothianidin and pyraclostiobin.

4. Composition according to Claim 2, **characterized in that** it comprises a synergistically effective mixture of thiacloprid and pyraclostrobin.

5. Composition according to Claim 2, **characterized in that** it comprises a synergistically effective mixture of acetamiprid and pyraclostrobin.

6. Composition according to any of Claims 2 to 5, characterized the weight ratio of active compound of group (a) to active compound of group (b) as set forth in Claim 1 is between 1000:1 and 1:100.

7. Use of a composition according to any of Claims 2 to 6 for treating seed.

8. Use of a composition according to any of Claims 2 to 6 for controlling insects which attack plants or seed.

9. Method for protecting seed and plants against insects, **characterized in that** seed is treated with a composition according to any of Claims 2 to 6.

10. Method for controlling insects, **characterized in that** a composition according to any of Claims 2 to 6 is allowed to act on the insects and/or their habitat.

11. Process for preparing insecticides, **characterized in that** a synergistically insecticidally effective mixture according to any of Claims 2 to 6 is mixed with extenders and/or surfactants.

12. Seed, **characterized in that** it has been treated with a composition according to any of Claims 2 to 6 and contains an effective amount of the composition.

13. Use of a composition comprising a synergistically insecticidally effective mixture of at least one compound selected from the group consisting of:

(a) clothianidin, imidacloprid, thiacloprid, and
(b) pyraclostrobin for protecting seed from plants against insects, said plants being selected from the group consisting of:

cereal plants, corn, millet, rice, sugar cane, soybeans, sunflowers, potatoes, cotton, oilseed rape, canola, tobacco, sugar beet, fodder beet, asparagus, hops, fruit plants and vegetables.

## Revendications

1. Utilisation d’un agent comprenant un mélange insecticide synergiquement actif d’au moins un composé choisi parmi

(a) la clothianidine, l’imidaclopride, le thiaclopride, l’acétamipride
et de
(b) la pyraclostrobine

pour une application sur des plantes, choisies parmi : les plantes céréalières, le maïs, le millet, le riz, la canne à sucre, le soja, le tournesol, les pommes de terre, le coton, le colza, le canola, le tabac, les betteraves sucrières, les betteraves fourragères, les asperges, le houblon, les plantes à fruits ou les légumes.

2. Agent comprenant un mélange insecticide synergiquement actif d’au moins un composé choisi parmi

(a) la clothianidine, le thiaclopride, l’acétamipride et de
(b) la pyraclostrobine.

**3.** Agent selon la revendication 2, **caractérisé en ce qu'**il comprend un mélange synergiquement actif de clothianidine et de pyraclostrobine.

**4.** Agent selon la revendication 2, **caractérisé en ce qu'**il comprend un mélange synergiquement actif de thiaclopride et de pyraclostrobine.

**5.** Agent selon la revendication 2, **caractérisé en ce qu'**il comprend un mélange synergiquement actif d'acétamipride et de pyraclostrobine.

**6.** Agent selon l'une quelconque des revendications 2 à 5, **caractérisé en ce que** le rapport pondéral de la substance active du groupe (a) à la substance active du groupe (b) selon la revendication 1 se situe entre 1000:1 et 1:100.

**7.** Utilisation d'un agent selon l'une quelconque des revendications 2 à 6 pour le traitement de semences.

**8.** Utilisation d'un agent selon l'une quelconque des revendications 2 à 6 pour lutter contre des insectes qui attaquent des plantes ou des semences.

**9.** Procédé pour la protection de semences et de plantes contre les insectes, **caractérisé en ce qu'**on traite les semences avec un agent selon l'une quelconque des revendications 2 à 6.

**10.** Procédé pour lutter contre les insectes, **caractérisé en ce qu'**on laisse agir des agents selon l'une quelconque des revendications 2 à 6 sur les insectes et/ou leur espace de vie.

**11.** Procédé pour la préparation d'agents de lutte contre les insectes, **caractérisé en ce qu'**on mélange un mélange insecticide synergiquement actif selon l'une quelconque des revendications 2 à 6 avec des diluants et/ou des substances tensioactives.

**12.** Semences, **caractérisées en ce qu'**elles sont traitées avec un agent selon l'une quelconque des revendications 2 à 6 et contiennent une quantité efficace de l'agent.

**13.** Utilisation d'un agent comprenant un mélange insecticide synergiquement actif d'au moins un composé choisi parmi

(a) la clothianidine, l'imidaclopride, le thiaclopride et de
(b) la pyracloatrobine

pour la protection des semences de plantes contre des insectes, les plantes étant choisies parmi :

les plantes céréalières, le maïs, le millet, le riz, la canne à sucre, le soja, le tournesol, les pommes de terre, le coton, le colza, le canola, le tabac, les betteraves sucrières, les betteraves fourragères, les asperges, le houblon, les plantes à fruits ou les légumes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0278595 A2
- WO 9601256 A1
- EP 0398692 A2
- EP 0876332 A1
- WO 03015515 A
- EP 0376279 A2
- EP 0235725 A2
- WO 9104965 A1
- EP 0192060 A1
- US 4272417 A
- US 4245432 A
- US 4808430 A
- US 5876739 A
- US 20030176428 A1
- WO 2002080675 A1
- WO 2002028186 A2
- WO 9637494 A
- WO 9825923 A


### In der Beschreibung aufgeführte Nicht-Patentliteratur


- The Pesticide Manual. British Crop Protection Council, 2003
- **COLBY, S.R.** Caculating Synergistic and Antagonistic Responses of Herbicide Combinations. *Weeds,* 1967, vol. 15, 20-22